# EUROPEAN PATENT APPLICATION

(11) **EP 4 450 178 A1**
(43) Date of publication of application: **23.10.2024**
(21) Application number: 22847264.3
(22) Date of filing: 13.12.2022
(51) Int. Cl.: B09B 3/40, B01D 53/86, C10B 53/02, C10B 53/07, C10B 57/02, C10B 57/14, C10K 1/04, C10K 1/08, C10K 1/18, C10L 9/08, C10B 47/30

(54) **METHOD FOR VALORIZATION OF WASTE MATERIAL**

(30) Priority: 13.12.2021 ES 202131151
(71) Applicant: GREENE ENTERPRISE, S.L., 03203 Elche (ES)
(72) Inventor: GRACIA BUDRÍA, José Manuel, 03203 ELCHE (ALICANTE) (ES)
(74) Representative: Isern Patentes y Marcas S.L.
(86) International application number: PCT/ES2022/070797
(87) International publication number: WO 2023/111376

(57) **Abstract**

The present invention relates to a method for valorizing refuse material comprising a selective pyrolysis, based on: a first step of pyrolysis of the biogenic fraction, with at least one subsequent condensation step, and a second step of pyrolysis of the synthetic fraction with at least one subsequent condensation step; wherein the first and second pyrolysis steps are configured in series; wherein the first pyrolysis step is configured to extract at least a fraction of biogenic combustible gas which continues to the first condensation step, and a fraction of solid material that is transported to the second step of pyrolysis of the synthetic fraction, which is carried out at a higher temperature than the first pyrolysis step, and which is configured to obtain a fraction of synthetic combustible gas which continues to the second condensation step, and a fraction of solid material.

## Description

### SECTOR OF THE ART

The present invention falls within the field of methods for valorization carbonaceous, i.e., having a carbon-rich composition, refuse material. More specifically, it falls within the methods for valorizing carbonaceous refuse material by means of pyrolysis processes, with the aim of obtaining pyrolytic crude oil, which can be given a new use within the production line for obtaining hydrocarbons, as well as the extraction of other reusable elements; permanent gas, equivalent to a city gas, useful as a source of energy; and a char with potential agricultural and industrial use.

### BACKGROUND OF THE INVENTION

Nowadays, the pyrolysis technique is widely known and used, understood as a thermal decomposition in the absence of oxygen, of matter having a carbonaceous base, such as plastics, wood, paper, organic waste or polymers, which are present in different proportions in solid refuse waste.

Due to the use of pyrolysis, part of the waste is turned into hydrocarbons, which are more or less oxygenated, solid, liquid and gaseous, which can be subjected to optimal chemical recovery. Thus, a fraction of notable pyrolytic crude oil is obtained, which can be reintroduced in the production chain to obtain liquid hydrocarbons that can be used as secondary raw materials and/or as fuel.

In this sense, pyrolysis has been used at an industrial level to obtain pyrolytic crude oil from waste, which is reused according to the previously mentioned technique. For this reason, we can find numerous documents in the state of the art that describe methods or systems that use the pyrolysis technique.

For example, we can find document BG110937, which describes a method and the associated installation for the conversion of residual hydrocarbon products, and the use of the products obtained from reprocessing. In order to achieve this, the invention proposes subjecting the refuse to pyrolysis at low temperature in the absence of air, with the aim of extracting a part of solid waste, leftover from the pyrolysis method, and a mixture of vapour and gas, from which the moisture will be extracted by means of a separation by staggered condensation, obtaining a highly caloric gas, which will be redirected to generate electrical energy.

According to said invention, the facility for carrying out the aforementioned method will comprise a pyrolysis reactor, a supply hopper and a unit for the removal of the solid waste obtained from the pyrolysis process.

We can also find document WO8300046, which describes a method for degassing material with organic compounds, such as household or industrial waste materials, through indirect heating for a time between 40 to 80 minutes, bringing the waste materials to a temperature of at least 250 °C, up to a maximum of 500 °C, extracting the gas from pyrolysis, which can be subsequently used as fuel.

Document RU2232347 also forms part of the state of the art and describes a processing of waste materials, such as poor-quality coal, wood scraps or household trash, through a pyrolysis process producing a combustible gas that can be used to heat steam or hot water boilers, as well as gas turbines for power generation.

Lastly, we can also find document ID201605721, which describes a gasification process through pyrolysis for waste recycling, wherein the gasification or pyrolysis equipment comprises a dryer, a gasifier, gas purifiers, and a meter with a fuel inlet system with propulsion engines, and wherein the pyrolysis method consists of drying the waste, with a subsequent gasification, obtaining a clean gas that can be used as fuel for diesel engines.

As can be observed, the preceding documents, in addition to all the rest that also make up the state of the art, relate to the treatment of solid refuse waste by means of a pyrolysis process at relatively low temperatures.

However, it is known that the output products of the pyrolysis steps also comprise a solid fraction, of biological and synthetic origin, and another fraction of combustible gas, which can be biogenic gas, obtained at temperatures of approximately 350 °C, and synthetic gas, which is obtained at temperatures between 500 °C and 550 °C,
wherein the cited documents only achieve optimal biogenic gas extraction, since the pyrolysis processes are carried out at temperatures that do not exceed 500 °C, disposing of part of the synthetic combustible gas, which also comprises condensable vapours in an oil fraction composed of nonpolar hydrocarbons that have a value similar to that of organic crude oil and which can be converted to conventional fuels through catalytic hydrogenation.

On the other hand, a non-condensable synthetic gas fraction at room temperature is also obtained, after the condensation of the vapours, which contains light hydrocarbons with a high calorific value, that can be reused for power generation.

In this way, the methods of the state of the art do not make optimal use of the waste material making it necessary for a method to be developed that achieves a complete extraction and separation of the gases from the waste material, being not only limited to the biogenic gas part, but also to the synthetic gas part, having high calorific value.

Furthermore, it is necessary to improve the state of the art to achieve the pyrolytic separation of the output flows of the biogenic and synthetic part of the waste, thereby optimising energy efficiency and product quality.

### DESCRIPTION OF THE INVENTION

The method for valorizing refuse material proposed by the invention is configured as a remarkable novelty within its field of application, since according to its implementation and in an exhaustive manner, the aforementioned objectives are satisfactorily achieved, with the characterising details that make it possible and that distinguish it conveniently collected in the final claims that accompany this description.

Specifically, the present invention describes a method for valorizing refuse material that allows for the extraction of biogenic combustible gases and synthetic combustible gases, from which hydrocarbons are extracted, at least partially oxygenated, in the form of pyrolytic crude oil, which can be reintroduced in the productive chain as a secondary raw material to obtain hydrocarbons for transport.

In addition, the method object of the present invention discloses a system for reusing all the by-products generated in the different methods, so as to achieve the self-sufficiency of the production line.

In order to achieve this, the present invention proposes the use of two pyrolysation processes in series, one carried out at a lower temperature, and another carried out at a higher temperature, so as to achieve the separate extraction of biogenic combustible gas and synthetic combustible gas, respectively.

In this context, pyrolysis is understood as the thermal process at medium and high temperature in the absence of oxygen through thermal degradations in which a combustible gas and a solid fraction also able to be volatilised, commonly called char, are obtained.

By subsequently applying a condensation method to the combustible gas, it is possible to extract a liquid fraction, containing a part of pyrolytic crude oil, and a fraction of non-condensable combustible gas, called permanent gas.

In this way, the method object of the present invention proposes carrying out two pyrolysation processes in series, with a subsequent condensation process, at different temperatures, from which the combustible gas and the liquid/solid fraction is obtained, with the subsequent step of staggered condensation applied to each of the gases obtained, to separate combustible gas into permanent gas and pyrolytic crude oil.

As previously explained, the method comprises a first line for the extraction of biogenic combustible gas comprising a feed hopper, and a preheating to achieve the evaporation of water from the raw material, at temperatures of approximately 105 °C. The water vapour can be extracted or continue towards the pyrolysis step.

A pyrolysation is subsequently applied to the dehumidified raw material, at a medium temperature, of approximately 350 °C, obtaining a fraction of biogenic combustible gas, and a solid fraction, containing charcoal, inert matter and synthetic materials.

Wherein the solid fraction will continue to the second synthetic combustible gas extraction line, by means of a pyrolysation method at a higher temperature, of approximately 520 °C, obtaining a synthetic combustible gas, and a solid fraction comprising only charcoal and inert matter.

The solid fraction will be mixed with the soot output from the gas filters, considered as a type of lighter particulate, also carbonaceous based, and will be stored for sale. Thus, no solid waste is generated in the process.

Using this double pyrolysation process in series, the extraction process is optimised, obtaining not only the biogenic combustible gas, but also synthetic combustible gas. Wherein these two gases will be redirected to the separate parallel steps of hot cleaning, applying different temperatures to the two types of combustible gases.

After the cleaning steps, they will be redirected to parallel steps of condensing and fractioning the combustible gases, each at a different temperature, separating the aqueous fractions from the gaseous fractions, which are reconverted into non-condensable permanent gases.

On the one hand, the totality of the permanent gas that comes from the biogenic fraction, and part of the permanent gas that comes from the synthetic fraction, will be cleaned and sent to a combustion chamber, in which heat can be provided to raise the temperature of the different steps of the method, until the designed temperatures are reached. These gases may also be redirected to a gas tank, to be used at a later time.

On the other hand, the other part of the permanent gas that comes from the synthetic fraction, and which has a high calorific value, is taken to a cogeneration system with an alternative engine, producing electrical and/or thermal energy, that will be able, for example, to be used to put the different systems comprised in the method into operation, or to be used for self-consumption, so that the plant is thermally and electrically self-sufficient.

There is also the possibility that, in case that the thermal efficiency of the steps is very high, and/or the steps are electrified, a surplus of synthetic permanent gas may be produced, which can be subsequently marketed.

Likewise, the aqueous fraction obtained from the condensation processes will pass through a filtering step, obtaining the pyrolytic crude oil, which may be used in subsequent methods to reconvert it into usable hydrocarbons as fuel.

In this way, as indicated, the present invention proposes a method for valorizing waste, with two pyrolysis processes in series, so that optimisation is achieved, increasing the material and energy performance of the extraction of combustible gases based on a single initial feeding, which does not require the different types of waste to be separated, since each one will be selectively degraded in the respective pyrolysation processes.

The reuse of all by-products obtained in the steps of the method is also envisaged in order to achieve calorific and electrical power self-sufficiency, if economically convenient.

The method for valorizing refuse material and the set of elements described represent an innovative structure with structural and constitutive features heretofore unknown, reasons which, taken together with its usefulness, provide it with sufficient grounds for obtaining the requested exclusivity privilege.

### BRIEF DESCRIPTION OF THE FIGURES

To complement the description that is being made and for the purpose of helping to better understand the features of the invention, a set of drawings is attached as an integral part of said description wherein the following has been depicted with an illustrative and non-limiting character:

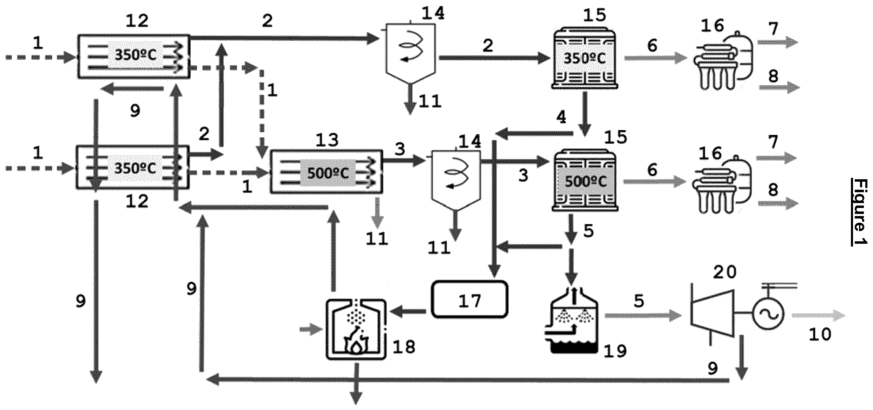

Figure 1 shows a diagram of the method object of the present invention

### List of references and figures:

- 1.: Raw material line
- 2.: Biogenic combustible gas line
- 3.: Synthetic combustible gas line
- 4.: Permanent biogenic gas line
- 5.: Permanent synthetic gas line
- 6.: Liquid fraction
- 7.: Pyrolytic crude oil fraction
- 8.: Aqueous fraction
- 9.: Thermal power line
- 10.: Electric power line
- 11.: Disposable solid waste line
- 12.: Step of pyrolysis of the biogenic fraction
- 13.: Step of pyrolysis of the synthetic fraction
- 14.: Step of cleaning the combustible gas
- 15.: Condensation step
- 16.: Step of filtration of the liquid fraction
- 17.: Step of storage of permanent gas
- 18.: Step of combustion of permanent gas
- 19.: Step of cleaning the permanent gas
- 20.: Cogeneration system

### PREFERRED EMBODIMENT OF THE INVENTION

In the following detailed description of the preferred embodiments, reference is made to the accompanying drawings, which form a part of this specification and in which specific preferred embodiments are shown by way of illustration, showing how invention may be carried out. These embodiments are described in sufficient detail to enable those skilled in the art to carry out the invention, and it is understood that other embodiments may be used and, moreover, logical, structural, mechanical, electrical and/or chemical changes may be made without departing from the scope of the invention. To avoid details that not necessary to enable those skilled in the art to carry out the invention, the detailed description should not, therefore, be understood in a limiting manner.

Particularly, the present invention proposes a method for valorizing refuse material, such as the refuse carbonaceous waste, which is not considered dangerous but which can be gasified, wherein the method comprises at least two steps configured in series: a first step of pyrolysis of the biogenic fraction 12 of the refuse material, a second step of pyrolysis of the synthetic fraction 13 of said refuse material.

Wherein the first step of pyrolysis of the biogenic fraction 12 is done at a lower temperature than the temperature of the second pyrolysis step, and extracted from which will be at least a fraction of biogenic combustible gas, which will continue until reaching a subsequent condensation step, as well as a fraction of solid material,
wherein the solid material will continue to the second step of pyrolysis of the synthetic fraction 13 which, as previously mentioned, is carried out at a temperature higher than that of the pyrolysis step of the biogenic fraction 12, obtaining at least a fraction of synthetic combustible gas, which will continue until a subsequent condensation step, and a fraction of inert solid material, combustible char.

Thus, a method is proposed comprising at least two production lines in series, such that a separation is not required due to the morphology and/or quality of the raw material, given that it uses a single feeding step, through an initial feed hopper, the solid waste first going through the pyrolysis step of the biogenic fraction 12, at a lower temperature, and, subsequently, the through the step of pyrolysis of the synthetic fraction 13, which is done at a higher temperature,
wherein the gases obtained in each of the pyrolysis steps continue until reaching the respective condensation steps, making up a complete method, which includes both two pyrolysis steps in series, and the condensation of the gases obtained in said steps.

Preferably, the operating temperature of the first pyrolysis step is comprised between 280 °C and 350 °C, while the operating temperature of the second pyrolysis step is comprised between 500 °C and 520 °C.

In a preferred embodiment, the first step of pyrolysis of the biogenic fraction 12 comprises at least:
- an initial feed hopper that ensures the regularity of the feeding with refuse material;
- a step of indirect preheating and/or vaporisation of the water of the raw material introduced;
- a pyrolysation step, with regular and progressive heating up to 350 °C, obtaining a gaseous fraction in the form of biogenic combustible gas, and a solid fraction comprising one part of charcoal, one part of inerts and one part of synthetic materials;

On the other hand, the second step of pyrolysis of the synthetic fraction 13, into which the solid fraction from the previous pyrolysation will enter, comprises at least:
- a step of hot feeding, which will be carried out at a temperature preferably between 350 °C and 370 °C,
- and a synthetic pyrolysis step in which a fraction of synthetic combustible gas is obtained, and a solid fraction in which only charcoal and inert substances, which will be discarded, remain.

In other words, the raw material will enter through a feed hopper to a preheating step at a temperature higher than 100 °C to evaporate the water present in said raw material, and will, subsequently, pass to biogenic pyrolysation 12, from which a fraction of combustible gas and a solid fraction are obtained. Both steps can be merged into a single unit,
wherein the solid fraction will continue to a feed hopper, which will maintain the temperature at 350 °C and guarantee a regular feeding of the second step of synthetic pyrolysation 13, wherein the temperature will be raised to a range comprised between 520 °C and 570 °C, extracting a fraction of synthetic combustible gas and a solid fraction that will be discarded.

In a preferred embodiment, the pyrolyzers will be sealed rotary reactors, with a fixed sleeve coated with a refractory material and configured to have a rotational movement that ensures the correct homogenisation of the solid waste that passes therethrough, maximising the continuous extraction of gases obtained from pyrolysis and optimising the pyrolysis process of the solid matter introduced therein.

According to the aforementioned embodiments, a method is achieved in which, by means of two consecutive steps, biogenic combustible gas and synthetic combustible gas are obtained from the same refuse material.

In order to make the most of the gases, they pass through the respective steps, in parallel and separately, of cleaning the combustible and condensation gas from the fluids,
wherein the biogenic combustible gas goes through a cleaning step 14 at temperatures above 350 °C, and a condensation step 15 in a first condensation unit that separates at least a liquid fraction and a permanent biogenic gas fraction,
wherein the synthetic combustible gas will go through a cleaning step 14 at temperatures above 520°C, and a condensation step 15 in a second condensation unit, which separates a liquid fraction and a permanent synthetic gas fraction.

In a preferred embodiment, the cleaning of combustible gases, both biogenic and synthetic, is carried out by means of a treatment with Ca(OH)₂ and/or ceramic filters and/or cyclones, so as to achieve the removal of acid gases, and/or ceramic filters and/or cyclones that retain solid impurities, mainly particles generated in the pyrolyzers.

Likewise, as mentioned earlier, for biogenic combustible gases, temperatures above 350 °C are used, and for synthetic combustible gases, temperatures above 520 °C are used, so as to avoid condensation during the cleaning step.

On the other hand, and in another preferred embodiment, the synthetic combustible gas may undergo a maturation step in a maturation reactor at temperatures above 520 °C before entering the cleaning step of the same, which adjusts the degree of aromatic condensation.

In a preferred embodiment, the condensation units 15 will have the features of condensation towers protected in another invention by the same applicant, which are therefore modular plate towers, with shell and tube heat exchangers, wherein a refrigerant gas circulates through the tubes, such as air, for example, and the combustible gas circulates through the shell, configuring a homogeneous cooling and a progressive condensation.

For example, they can be condensation towers with at least 8 condensation plates, which will have a thermal gradient between 350 °C and 30 °C in the case of biogenic combustible gas, and a thermal gradient between 500 °C and 30 °C in the case of synthetic combustible gas, being able to have different output flows depending on the boiling temperature of the different fluids present in the aforementioned gases.

In any case, the gas that acts as a refrigerant will increase the temperature thereof and this thermal use can be utilised in a subsequent step to improve plant efficiency. For example, this hot air will be preferably used as the air inlet into the combustion chamber.

According to the aforementioned embodiments, related to the steps of cleaning 14 and condensation 15 of the combustible gases obtained in the respective pyrolysis steps, an absolute separation of the permanent gases is achieved with respect to the liquid waste that may remain in the gases themselves, which can later be used as fuel.

In this sense, the method object of the present invention describes two parallel processes that come after both the permanent gases obtained, and the liquid fractions.

Preferably, the liquid fractions obtained in the condensation steps 15 will be sent to a filtering step 16 with at least one particulate filter.

The condensation of the biogenic combustible gas will generate at least a fraction concentrated in HCOs, or oxygenated polar pyrolytic crude oil, and another fraction of water with light polar hydrocarbons. The pyrolytic crude oil can be used in industry. The most aqueous fraction may be used in the different steps of the method that use this element, such as spraying for cleaning permanent gases, the final destination thereof being for agricultural, phytosanitary use, water for composting or industrial cleaning. Other catalytic post-treatments of the bio-condensates, with the aim of improving the product, are not excluded.

Also preferably, and alternatively to the preceding embodiment, the gaseous fractions obtained in the condensation steps 15 are used in at least one combustion step 18, in a gas combustion chamber comprising a propane gas burner and an air inlet that allows combustion to be carried out,
wherein the gas combustion chamber, in a first operating condition for initiating the method object of the present invention, has the propane burner running until the desired design temperatures of the method are reached.

And wherein, in a second operating condition of maintenance of the design temperatures, the oxidation of the introduced combustible gas is used, which comes from the previously explained condensation steps.

Thus, the combustion chamber will have a propane gas burner for starting the method object of the present invention, which will remain on until the process reaches the design temperatures. From this moment, the oxidation of the permanent gas will maintain the temperatures of the process.

In another preferred embodiment, the method comprises a step of storing 17 the combustible gas in a storage tank, prior to the combustion chamber, so that gas that is not being used can be instantly stored for further use.

In another preferred embodiment, part of the permanent synthetic gas, which comes from the second step of condensation of the synthetic combustible gas, will be recirculated to a cogeneration system 20, with capacity to generate electricity that powers, for example, the different elements of the method itself.

Likewise, the excess thermal energy of the cogeneration system can be redirected to raise and/or maintain the temperature of the pyrolysis steps 12, 13, so as to achieve full utilisation, both thermally and electrically, of the permanent rich gases obtained from the synthetic fraction.

In another preferred embodiment, and parallel to the previous embodiments, the process includes a step of washing 19 the permanent gases, which will be prior to the storing step 17, the combustion step 18, or to the inlet to the cogeneration system 20.

Preferably, the step of washing 19 the permanent gases will be carried out by spraying with the lighter condensate obtained from the pyrolysis gases.

Thus, according to the aforementioned embodiments, a reuse of permanent gases is achieved, to enable operating temperatures to be reached and maintained, without having to use external combustible gases, and part of the permanent synthetic gas is also reused for power generation, allowing a self-sufficiency of the plant in which the method object of the present invention is installed.

In another preferred embodiment, the pyrolysation steps 12, 13 comprise emergency combustible gas outlets by using normally open safety solenoid valves, connected to a header pipe with a high temperature suction fan at the end thereof, which will evacuate the combustible gases to a pilot burner at the end thereof.

Thus, in an emergency, the combustible gas is transported to a flare where aforementioned gases will be burned, preventing the direct emission thereof into the atmosphere. It is normally off, and enters into operation in the event of an emergency that may occur during the completion of the method object of the present invention.

Preferably, the oxidised gases that come from any of the steps described in the invention will go through a cleaning step, which preferably comprises at least three different steps:
- a step for removing acid gases and/or metals by adding Ca(OH)₂ and/or NaHCOs, and dioxins and/or furans, by adding activated carbon;
- a filtering step, by means of a sleeve and/or particle filter;
- and a NOx removal step, by means of urea injection.

Thus, it is possible to meet the legal emissions target in the different steps of the method object the present invention.

In a preferred embodiment, and to optimise the resources used in the operation of the method object the present invention, the parallel use of two pyrolysis steps of the biogenic fraction, which will feed a single step of synthetic pyrolysis, is proposed.

Having sufficiently described the nature of the present invention, as well as the manner in which it may be put into practice, it is not considered necessary to provide further explanation for a person skilled in the art to understand its scope and the advantages derived therefrom, further stating that, within the essential nature thereof, the invention may be put into practice in other embodiments that differ in detail from that which is indicated by way of example, said embodiments also covered by the requested protection, provided that they do not alter, change or modify the fundamental principle of the invention.

## Claims

1. **A method for valorizing refuse material, characterised in that** it comprises a selective pyrolysis, based on at least:
∘ a first step of pyrolysis of the biogenic fraction (12), with at least one subsequent first condensation step,
∘ and a second step of pyrolysis of the synthetic fraction (13); with at least one second subsequent condensation step;
wherein the first and second pyrolysis steps are configured in series; wherein the first step of pyrolysis of the biogenic fraction is carried out at a lower temperature than the second pyrolysis step, and is configured to extract at least a fraction of biogenic combustible gas which continues to the first condensation step; and a fraction of solid material; and wherein the solid material obtained in the first pyrolysis step is transported to the second pyrolysis step of the synthetic fraction, which is carried out at a higher temperature than the first pyrolysis step, and which is configured to obtain a fraction of synthetic combustible gas which continues to the second condensation step, and a fraction of solid material.

2. **The method for valorizing refuse material** according to the first claim, **characterised in that** the first step of pyrolysis of the biogenic fraction comprises at least:
- an initial feeding step;
- a direct and/or indirect preheating and/or vaporisation of the moisture of the feed material;
- and a step of pyrolysis of the biogenic fraction (12);
and **in that** the second step of pyrolysis of the synthetic fraction comprises at least:
- a step of hot feeding;
- and a step of pyrolysis of the synthetic fraction (13).

3. **The method for valorizing refuse material** according to any of the preceding claims, **characterised in that** the first step of pyrolysis of the biogenic fraction (12) is carried out at a temperature comprised between 280 °C and 350 °C, and the second step of pyrolysis of the synthetic fraction (13) is carried out at a temperature comprised between 500 °C and 520 °C.

4. **The method for valorizing refuse material** according to any of the preceding claims, **characterised in that** the feeding step of the second pyrolysis step is carried out at a temperature comprised between 350 °C and 370 °C.

5. **The method for valorizing refuse material** according to any of the preceding claims, **characterised in that** the pyrolyzers are sealed and include rotating elements, configured to have a rotational movement for the homogenisation of the solid waste, and a fixed sleeve coated with a refractory material.

6. **The method for valorizing refuse material** according to any of the preceding claims, **characterised in that** the biogenic combustible gas goes through the steps of:
∘ cleaning the biogenic combustible gas (14) at a temperature comprised between 300 °C and 350 °C;
∘ and condensation (15) in a first condensation unit, configured to separate at least one liquid fraction, and at least one fraction of permanent biogenic gas;
and **in that** the synthetic combustible gas goes through the steps of:
∘ cleaning the synthetic combustible gas (14) at a temperature comprised between 450 °C and 520 °C;
∘ and condensation (15) in a second condensation unit, configured to separate at least one liquid fraction, and at least a fraction of permanent synthetic gas.

7. **The method for valorizing refuse material** according to claim 6, **characterised in that** the cleaning of the combustible gas comprises at least: a treatment with Ca(OH)₂ and/or ceramic filters and/or cyclones.

8. **The method for valorizing refuse material** according to claim 6, **characterised in that** the synthetic combustible gas goes through a maturation step in a maturation reactor, prior to entering the step of cleaning the synthetic combustible gas.

9. **The method for valorizing refuse material** according to claim 6, **characterised in that** the condensation units comprise a modular plate tower with shell and tube heat exchangers, wherein the refrigerant gas circulates through the tubes, and the combustible gas circulates through the shell, configuring a progressive cooling and condensation.

10. **The method for valorizing refuse material** according to claim 6, **characterised in that** the liquid fractions obtained in the condensation steps go through a filtering step (16).

11. **The method for valorizing refuse material** according to claim 6, **characterised in that** the gaseous fractions obtained in the condensation steps are used in at least one combustion step (18) in a gas combustion chamber.

12. **The method for valorizing refuse material** according to claim 11, **characterised in that** the gas combustion chamber comprises a commercial gas burner and an air inlet with at least:
∘ a first condition of initiating the method wherein the commercial gas burner will be in operation until the design temperatures of the method are reached;
∘ a second condition of maintaining the design temperature of the method through the use of the oxidation of the combustible gas introduced.

13. **The method for valorizing refuse material** according to claim 6, **characterised in that** it comprises a step of storing (17) the permanent combustible gas from the condensation steps in a gas tank.

14. **The method for valorizing refuse material** according to claim 6, **characterised in that** at least one part of the permanent synthetic gas obtained in the second condensation step is recirculated to at least one cogeneration engine (20).

15. **The method for valorizing refuse material** according to the preceding claim, **characterised in that** the cogeneration engine is configured to electrically power the different elements used in the processes of the method.

16. **The method for valorizing refuse material** according to claims 11, 13 or 14, **characterised in that** it comprises a step of washing the permanent gases (19), which is prior to the combustion of the gas (18) in a combustion chamber and/or gas storage (17) and/or entrance to the cogeneration engine (20).

17. **The method for valorizing refuse material** according to the preceding claim, **characterised in that** the step of washing the permanent gases (19) is carried out by spraying with the lighter condensate resulting from the permanent gases.

18. **The method for valorizing refuse material** according to claim 2, **characterised in that** the pyrolysation steps (12, 13) comprise emergency combustible gas outlets.

19. **The method for valorizing refuse material** according to the preceding claim, **characterised in that** the combustible gas emergency outlets comprise at least one safety solenoid valve that is normally open, connected to a header pipe with a high temperature suction fan, with a pilot burner at the end thereof, configured to transport and burn the combustible gas.

20. **The method for valorizing refuse material** according to claim 14, **characterised in that** part of the excess thermal energy from the cogeneration system (20) is reused to raise and/or maintain the temperature of the pyrolysis steps (12, 13).

21. **The method for valorizing refuse material** according to any of the preceding claims, **characterised in that** the oxidised gases in any of the preceding steps go through a cleaning step.

22. **The method for valorizing refuse material** according to the preceding claim, **characterised in that** the step of cleaning the oxidised gases comprises at least three steps:
∘ a step for removing acid gases and/or metals, by adding Ca(OH)₂ and/or NaHCOs, and dioxins and/or furans, by adding activated carbon;
∘ a filtering step, by means of a sleeve and/or particle filter;
∘ and a NOx removal step, by means of urea injection.

23. **The method for valorizing refuse material** according to any of the preceding claims, **characterised in that** it comprises two steps of pyrolysis of the biogenic fraction (12), configured to continuously feed a pyrolysis step of the synthetic fraction.
